# EUROPEAN PATENT APPLICATION

(11) **EP 2 813 929 A1**
(43) Date of publication of application: **17.12.2014**
(21) Application number: 12867825.7
(22) Date of filing: 27.12.2012
(51) Int. Cl.: G06F 3/048

(54) **INFORMATION PROCESSING DEVICE, INFORMATION PROCESSING METHOD, AND PROGRAM**

(30) Priority: 10.02.2012 JP 2012027026
(71) Applicant: Sony Corporation, Tokyo 108-0075 (JP)
(72) Inventor: MIYAZAWA, Yusuke, Tokyo 108-0075 (JP); MIYASHITA, Ken, Tokyo 108-0075 (JP); MORIYA, Shoichiro, Tokyo 108-0075 (JP)
(74) Representative: MFG Patentanwälte Meyer-Wildhagen Meggle-Freund Gerhard PartG mbB
(86) International application number: PCT/JP2012/083824
(87) International publication number: WO 2013/118418

(57) **Abstract**

Provided is an information processing device including an obtaining section configured to obtain a content item to be displayed in a first display area of a display screen, and an image generating section configured to generate a display image by laying out the content item based on an arrangement of the first display area.

## Description

### Technical Field

The present disclosure relates to an information processing device, an information processing method, and a program.

### Background Art

In recent years, the amount of information handled by a user has been increasing along with an increase in communication speed and computing power of information processing devices. However, there is a limit to the screen size of an information processing device. Therefore, various proposals have been made to efficiently display information using a limited screen area.

Frequently performing user operations, such as enlarging, shrinking or scrolling, in order to provide many pieces of information using a limited screen area increases the burden on the user. In view of this, the burden on the user can be reduced by assisting in the generation of layouts for efficiently providing information. In view of assisting in the automatic layout generation, Patent Literature 1, for example, discloses a system for assisting in the operation of laying out newspaper advertisements on the page space based on past record information.

### Citation List

### Patent Literature

Patent Literature 1: JP H7-325850A

### Summary of Invention

### Technical Problem

However, where information is laid out on the display screen of an information processing device, the arrangement of the display area itself may change. In view of this, the present disclosure proposes an information processing device, an information processing method, and a program capable of displaying information in a suitable manner for a characteristic of a display area.

### Solution to Problem

According to the present disclosure, there is provided an information processing device including an obtaining section configured to obtain a content item to be displayed in a first display area of a display screen, and an image generating section configured to generate a display image by laying out the content item based on an arrangement of the first display area.

Further, according to the present disclosure, there is provided an information processing method including obtaining a content item to be displayed in a first display area of a display screen, and generating a display image by laying out the content item based on an arrangement of the first display area.

Further, according to the present disclosure, there is provided a program for causing a computer to function as an information processing device including an obtaining section configured to obtain a content item to be displayed in a first display area of a display screen, and an image generating section configured to generate a display image by laying out the content item based on an arrangement of the first display area.

### Advantageous Effects of Invention

As described above, according to the present disclosure, it is possible to display information in a suitable manner for a characteristic of a display area.

### Brief Description of Drawings

[FIG. 1] FIG. 1 is an illustration showing an overview of a display area of a display screen of an information processing device according to one embodiment of the present disclosure.
[FIG. 2] FIG. 2 is an illustration of an overview of the information processing device according to the embodiment.
[FIG. 3] FIG. 3 is an illustration showing an example of a content item displayed as sub-information by the information processing device according to the embodiment.
[FIG. 4] FIG. 4 is an illustration showing an example of a configuration screen in which a content item to be displayed by the information processing device according to the embodiment is configured by a user who is providing the content item.
[FIG. 5] FIG. 5 is a block diagram showing a functional configuration of the information processing device according to the embodiment.
[FIG. 6] is an illustration showing an example arrangement of main information and sub-information to be displayed by the information processing device according to the embodiment.
[FIG. 7] FIG. 7 is an illustration showing Display Example 1 and Display Example 2 of a display screen to be displayed by the information processing device according to the embodiment.
[FIG. 8] FIG. 8 is an illustration showing an example of an area-enlarging operation of the information processing device according to the embodiment.
[FIG. 9] FIG. 9 is an illustration showing an example of an area-reducing operation of the information processing device according to the embodiment.
[FIG. 10] FIG. 10 is an illustration showing another example of an area-enlarging operation and an area-reducing operation of the information processing device according to the embodiment.
[FIG. 11] FIG. 11 is an illustration showing Display Example 3 and Display Example 4 of a display screen to be displayed by the information processing device according to the embodiment.
[FIG. 12] FIG. 12 is an illustration showing another example of an area-enlarging operation of the information processing device according to the embodiment.
[FIG. 13] FIG. 13 is an illustration showing Display Example 5 of a display screen to be displayed by the information processing device according to the embodiment.
[FIG. 14] FIG. 14 is an illustration showing an example of a sub-display area display operation of the information processing device according to the embodiment.
[FIG. 15] FIG. 15 is an illustration showing another example of an area-enlarging operation of the information processing device according to the embodiment.
[FIG. 16] FIG. 16 is an illustration showing another example of an area-enlarging operation of the information processing device according to the embodiment.
[FIG. 17] FIG. 17 is an illustration showing another example of a sub-display area to be displayed by the information processing device according to the embodiment, and another example of a sub-display area display operation.
[FIG. 18] FIG. 18 is an illustration of operation buttons to be displayed by the information processing device according to the embodiment.
[FIG. 19] FIG. 19 is an illustration showing an example of a sub-display area to be displayed while a map display screen is displayed by the information processing device according to the embodiment.
[FIG. 20] FIG. 20 is an illustration showing an example of a sub-display area to be displayed while a game screen is displayed by the information processing device according to the embodiment.
[FIG. 21] FIG. 21 is an illustration of content analysis of the information processing device according to the embodiment.
[FIG. 22] FIG. 22 is a diagram relating to weight determination for objects of the information processing device according to the embodiment.
[FIG. 23] FIG. 23 is an illustration showing an example of a layout of a sub-display area of the information processing device according to the embodiment.
[FIG. 24] FIG. 24 is a flow chart showing an operation example of the information processing device according to the embodiment.
[FIG. 25] FIG. 25 is a flow chart showing an operation example of a layout operation of the information processing device according to the embodiment.
[FIG. 26] FIG. 26 is a block diagram showing a hardware configuration of the information processing device according to the embodiment.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

Note that descriptions will be made in the following order.
1. Overview
2. Functional configuration
3. Example arrangement of display area
4. Display example and operation example
5. Layout process
6. Operation example
7. Hardware configuration example

### <1. Overview>

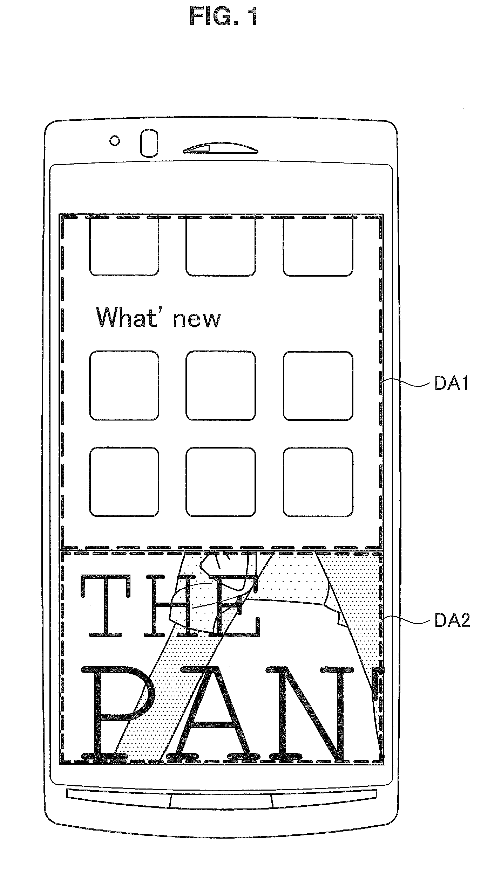

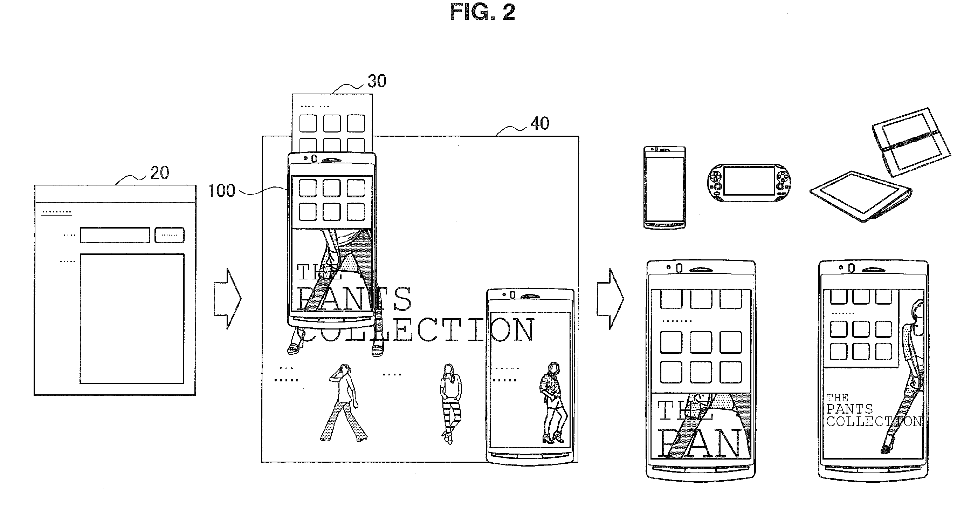

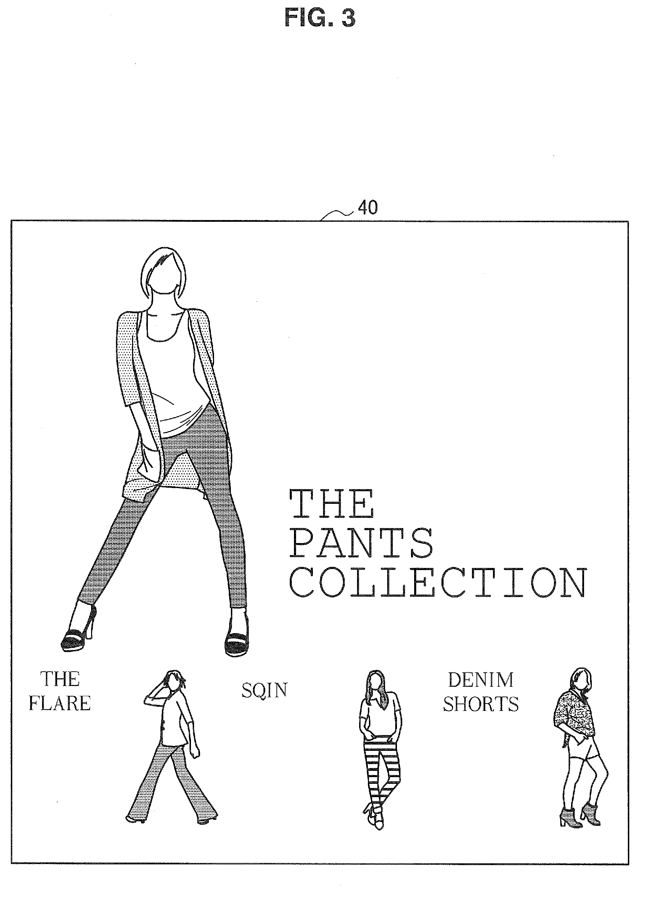

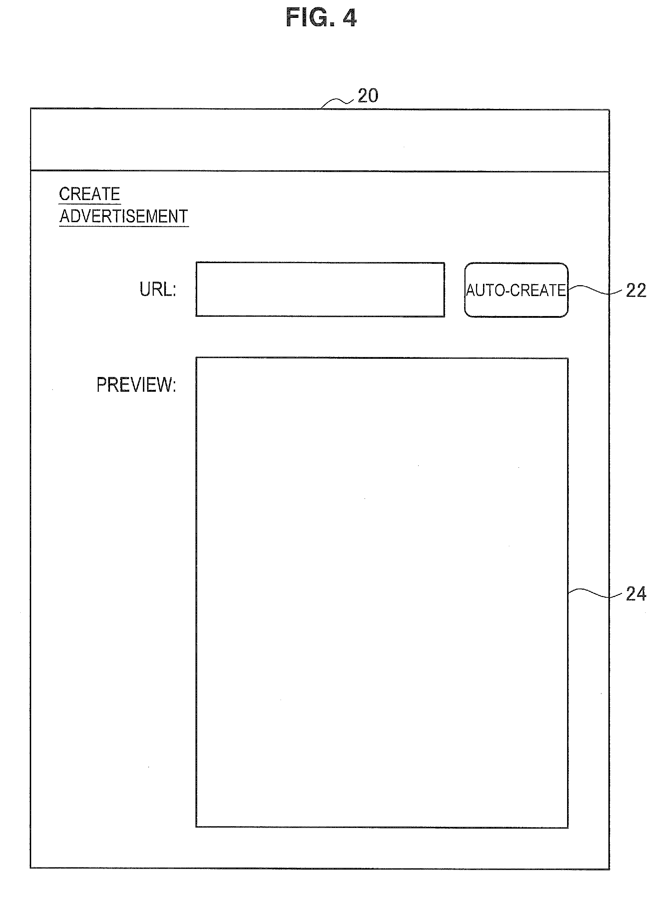

First, referring to FIG. 1 to FIG. 4, an overview of functions provided by an information processing device according to one embodiment of the present disclosure will be described. FIG. 1 is an illustration showing an overview of functions of the information processing device according to one embodiment of the present disclosure. FIG. 2 is an illustration of a display area of a display screen to be displayed by the information processing device according to the embodiment. FIG. 3 is an illustration showing an example of a content item displayed as sub-information by the information processing device according to the embodiment. FIG. 4 is an illustration showing an example of a configuration screen in which a content item to be displayed by the information processing device according to the embodiment is configured by a user who is providing the content item.

Referring to FIG. 1, an information processing device 100 according to one embodiment of the present disclosure is capable of generating a sub-display area DA2 different from a main display area DA1 of a display screen where main information is displayed. Sub-information different from the main information is displayed in the sub-display area DA2. The sub-information may be information subordinate to the main information. The sub-information may be information unrelated to the main information. For example, the sub-display area may be a dictionary display area. In such a case, the sub-information may be description text for a word displayed in the main information. The sub-display area may be an advertisement display area. In such a case, the sub-information may be an advertisement related to the main information, or may be an advertisement unrelated to the main information. The following description is directed to an example where the sub-information is an advertisement.

The present disclosure provides a method for efficiently displaying the sub-information. In order to efficiently provide the sub-information, it is preferred that the sub-display area DA2 is initially a very small partial area of the display screen, which can be enlarged by a user operation. That is, the arrangement of the sub-display area DA2 is changed in response to an operation. In view of this, it is preferred that the sub-information is laid out based on the arrangement of the sub-display area DA2.

FIG. 2 shows an overview of the function provided by such an information processing device 100. An advertiser uploads content data 40, from which an advertisement is generated, on an advertisement creating screen 20. Then, a layout engine generates a layout. Now, the layout of the advertisement is generated based on the arrangement of the sub-display area DA2. The arrangement of the sub-display area DA2 refers to a concept including the size, shape and position of the sub-display area DA2, for example. Now, the position of the sub-display area DA2 may be represented as an absolute position or as a relative position with respect to the display screen. As the layout of the advertisement is generated based on the arrangement of the sub-display area DA2, as described above, it is possible to produce an appropriate layout for a continuous change of the display area. It is also possible to provide an advertisement with an arrangement suitable for each device on which the advertisement is displayed.

FIG. 3 shows an example of the content data 40 of an advertisement used herein. The content data 40 may be image data of a poster, or the like. The content data 40 may also be HTML content published on the Web. In recent years, there are a variety of forms of advertisement. In addition to posters to be put up on the street or TV commercials, Web-based advertisements have become common. As an advertisement on the Web, a widely-employed form is a text string or an image linked to a Web page carried on a portion of a Web page of another business entity. In recent years, with smartphones and tablet devices becoming widespread, an advertisement is more often carried on a portion of an application screen, but it is nevertheless in most cases a text string or an image linked to a Web page. In contrast, the present disclosure proposes a new method for providing an advertisement.

As described above, the information processing device 100 generates a layout of an advertisement from the content data 40 based on the arrangement of the sub-display area DA2. For an object to be advertised, an advertiser often has poster image data or campaign Web page already produced. In view of this, the advertisement to be provided in the present disclosure enables an advertisement to be generated using such content data 40 without the advertiser having to newly generate data for Web advertisement. The information processing device 100 can generate the display image to be displayed in the sub-display area DA2 by cutting out a partial area of the content data 40 or re-arranging part objects included in the content data 40. Thus, it is possible to significantly reduce the burden on the advertiser. For example, as the advertiser inputs an URL (Uniform Resource Locator) indicating the location where the content data 40 is stored and presses an auto-create button 22 on the advertisement creating screen 20 shown in FIG. 4, a preview image of the advertisement may be displayed in a preview display area 24.

### <2. Functional configuration>

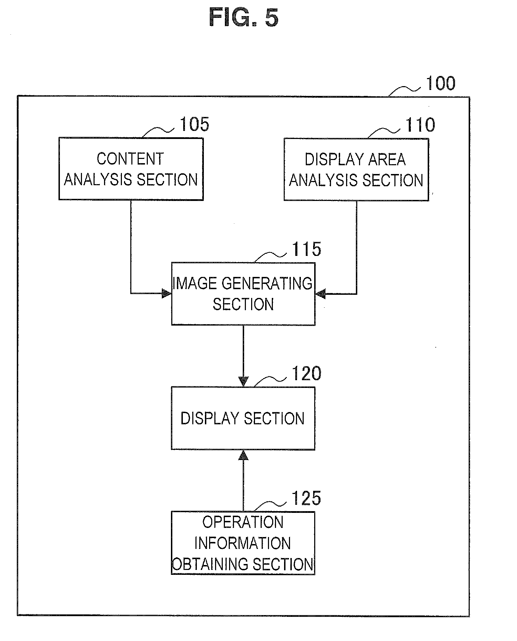

Now, referring to FIG. 5, a functional configuration of the information processing device 100 according to one embodiment of the present disclosure will be described. FIG. 5 is a block diagram showing the functional configuration of the information processing device according to the embodiment.

The information processing device 100 may be an information processing device such as a mobile phone, a PHS (Personal Handyphone System), a portable music player device, a portable video processing device, or a portable game device, for example. Alternatively, the information processing device 100 may be an information processing device such as a PC (Personal Computer), a household video processing device (a DVD recorder, a VCR, or the like), a PDA (Personal Digital Assistants), a household game device, or a household electric appliance.

The information processing device 100 primarily includes a content analysis section 105, a display area analysis section 110, an image generating section 115, a display section 120, and an operation information obtaining section 125.

### (Content analysis section 105)

The content analysis section 105 is an example of a content analysis information obtaining section for obtaining analysis information of the content data 40. That is, while the description below is directed to a case where the information processing device 100 has a function of analyzing the content data 40, the present technique is not limited to such an example. For example, the information processing device 100 may have a function of obtaining content analysis information, which is the result of an analysis of the content data 40 by an external device.

The content analysis section 105 generates content analysis information obtained by analyzing a characteristic of the content data 40. The content analysis section 105 is capable of analyzing the attribute of part objects included in the content data 40. Now, where the content data 40 is HTML data, the part objects may be image data or text data included in the content data 40. Where the content data 40 is one piece of image data, the content analysis section 105 may generate part objects by analyzing the image data and trimming parts included in the image data.

Note that the attribute analyzed by the content analysis section 105 may be a static attribute or may be a dynamic attribute. For example, an example of the attribute analyzed herein may be the size, shape, type, target, presence/absence of an event, display history, etc. For example, the size of a part object may be represented by an absolute size or may be represented by a proportion to be occupied by the part object with respect to the entire content data 40. The type of a part object may be image, text, button, counter, etc., for example. The target of a part object indicates whether the content of the part object is associated with the entire content data 40 or is associated with one or more item included in the content data 40. For example, a logo mark is associated with the entire content data 40, and text data indicating a price is associated with one or more item included in the content data 40. The presence/absence of an event of a part object indicates whether there is an event to be triggered in response to an operation made on the part object. For example, an event may be a transition to a Web page, a voting event, or the like. Where a fashion-related advertisement is displayed, as illustrated in FIG. 3, a vote button may be displayed for each fashion item or each example of coordination. With such a configuration, a user who sees this advertisement can vote for a fashion item or an example of coordination that the user likes. After sub-information generated from the same content data 40 has already been displayed, the content analysis section 105 may analyze the display history of each part object.

### (Display area analysis section 110)

The display area analysis section 110 has a function of analyzing the arrangement state of the sub-display area DA2. The sub-display area DA2 changes its arrangement state in response to a user operation. Therefore, the display area analysis section 110 is capable of analyzing the arrangement state of the sub-display area DA2 each time the arrangement state changes. Now, the arrangement of the sub-display area DA2 analyzed by the display area analysis section 110 includes the size, position, shape, etc., of the sub-display area DA2. The size of the sub-display area DA2 analyzed may be represented by an absolute value or may be represented by a proportion of the sub-display area with respect to the entire display screen. Where a plurality of sub-display areas DA2 are included, the relative position between the sub-display areas DA2 may be analyzed. The display area analysis section 110 is capable of supplying arrangement information of the sub-display area DA2.

### (Image generating section 115)

The image generating section 115 is capable of generating, from the content data 40, a display image to be displayed in the sub-display area DA2, based on the arrangement information of the sub-display area DA2 supplied from the display area analysis section 110. Based on the arrangement information of the sub-display area DA2, the image generating section 115 may generate a display image to be displayed in the sub-display area DA2 by cutting out a portion of the content data 40. The image generating section 115 may also generate a display image to be displayed in the sub-display area DA2 by laying out part objects included in the content data 40.

The image generating section 115 may generate a display image based on the content analysis information supplied from the content analysis section 105. Then, the image generating section 115 can generate a display image based on the attribute of a part object. For example, the image generating section 115 can generate a layout of a display image based on whether the part object is associated with the entirety or with an item. For example, in a state where the sub-display area DA2 is displayed in a very small part of the display screen, the image generating section 115 can increase the weight of a part object that is associated with the entirety. In a state where an enlarging operation has been performed on the sub-display area DA2 so that a fashion item or an example of coordination of the content data 40 is displayed, the image generating section 115 can increase the weight of a part object that is associated with an item. The image generating section 115 can also decrease, when a layout is generated again, the weight of a part object displayed while in a state where the sub-display area DA2 is displayed in a very small part of the display screen, for example.

### (Display section 120)

The display section 120 may include a display control section for controlling the display of a display image generated by the image generating section 115, and a display device, for example. The display section 120 can also control the display of the display screen so that the arrangement of the display area is changed based on operation information obtained by the operation information obtaining section 125. While the description herein is directed to the information processing device 100 having a display device and it is therefore assumed that the display section 120 is included in the display device, the present technique is not limited to such an example. For example, where the information processing device 100 does not include a display device, the display section 120 may be a display control section.

### (Operation information obtaining section 125)

The operation information obtaining section 125 may include an input section for allowing a user to input information, for example, and an input control circuit for generating an input signal based on the input, etc. For example, an example of the input section may be a touch panel, a mouse, a keyboard, a button, a microphone, a switch, a lever, or the like.

An example of the function of the information processing device 100 according to the present embodiment has been described above. Each component described above may be implemented by using a general-purpose member or circuit, or may be implemented by hardware specialized in the function of the component. The function of each component may be performed by loading a control program, describing procedures for an arithmetic unit such as a CPU (Central Processing Unit) to implement the function, from a storage medium such as a ROM (Read Only Memory) or a RAM (Random Access Memory) storing the control program, and by interpreting and executing the program. Therefore, the configuration to be used may be changed as necessary depending on the level of technology at the time of carrying out the present embodiment. Note that an example of the hardware configuration of the information processing device 100 will be described later in detail.

Note that a computer program for implementing the functions of the information processing device 100 according to the present embodiment as described above may be produced and installed on a personal computer, or the like. It is also possible to provide a computer-readable recording medium having such a computer program stored therein. The recording medium may be a magnetic disk, an optical disk, a magneto optical disk, a flash memory, or the like, for example. The computer program described above may be distributed via a network, for example, without using a recording medium.

### <3. Example arrangement of display area>

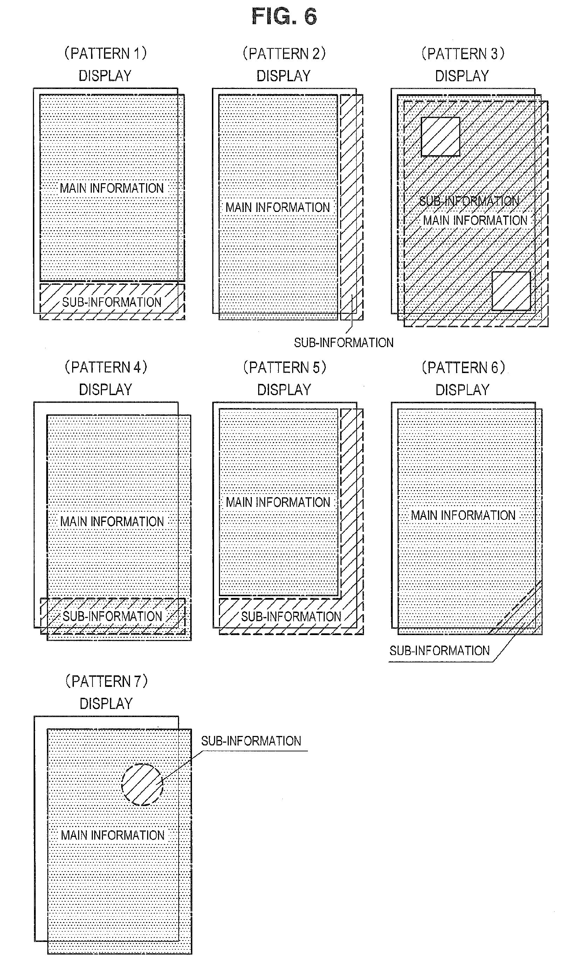

Next, referring to FIG. 6, an example arrangement of the main information and the sub-information in the display screen of the information processing device 100 according to one embodiment of the present disclosure will be described. FIG. 6 is an illustration showing an example arrangement of the main information and the sub-information displayed by the information processing device according to the embodiment.

FIG. 6 shows example arrangements of the main information and the sub-information of Patterns 1 to 7. For example, as shown in Pattern 1, the sub-information may be arranged below the main information in the same layer as the main information. As shown in Pattern 2, the sub-information may be arranged beside the main information in the same layer as the main information. Although the sub-information is an advertisement arranged on the right of the main information in FIG. 6, the sub-information may be arranged on the left of the main information.

As shown in Pattern 3, the sub-information may be arranged in a lower layer under the main information. Sub-information arranged in a location of a window for exposing the lower layer in the main display area DA1 is displayed. As shown in Pattern 4, the sub-information may be arranged in an upper layer over the main information. As shown in Pattern 5, the sub-information may be arranged in the same layer as the main information and so that the sub-information surrounds the main information in an L-letter shape. As shown in Pattern 6, the sub-information may be arranged in a corner area of the rectangular area in which the main information is displayed. As shown in Pattern 7, the sub-information may be arranged in a circular frame area provided within the main display area.

As described above, the main information and the sub-information may be arranged in the same layer or may be arranged in different layers. The shape of the sub-display area DA2 is not limited to the example shown in FIG. 6. The shape illustrated is an example, and the shape of the display area may be any of various shapes. If the main display area DA1 includes a blank area or an area where no information is displayed yet as the information is being loaded, such an area can be used as the sub-display area DA2. As an example shown in Pattern 3, the sub-display area DA2 may be a plurality of non-continuous areas. In such a case, the plurality of sub-display areas DA2 may be, for example, a blank area in the main display area DA1 and the lower end of the screen.

### <4. Display example and operation example>

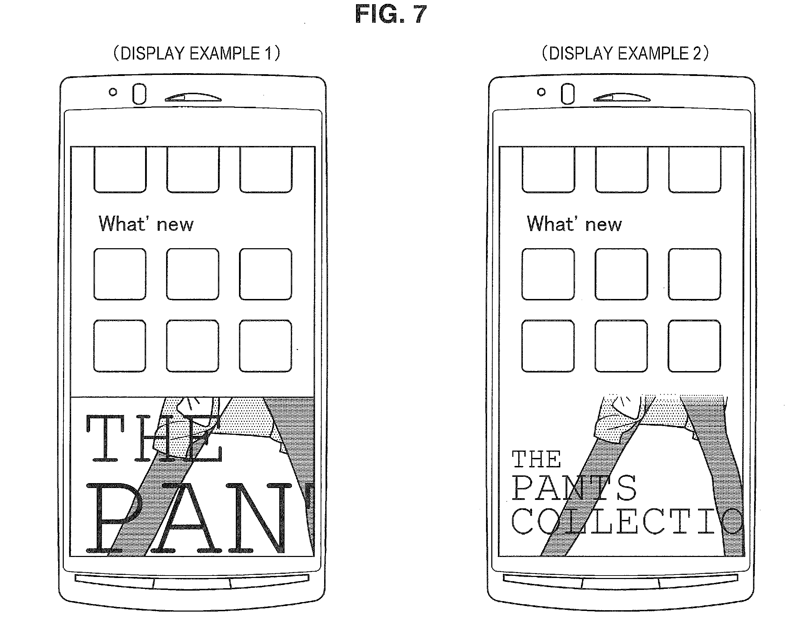

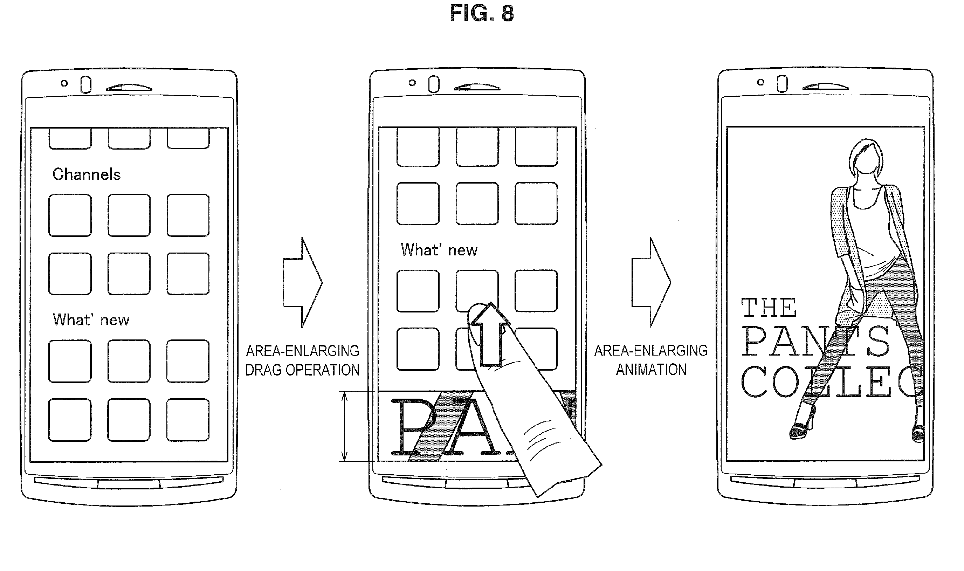

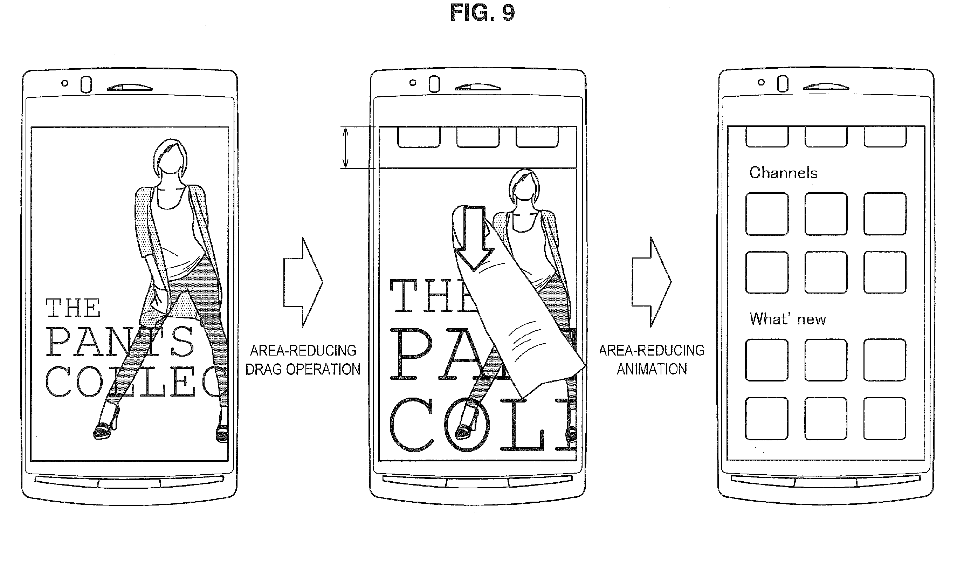

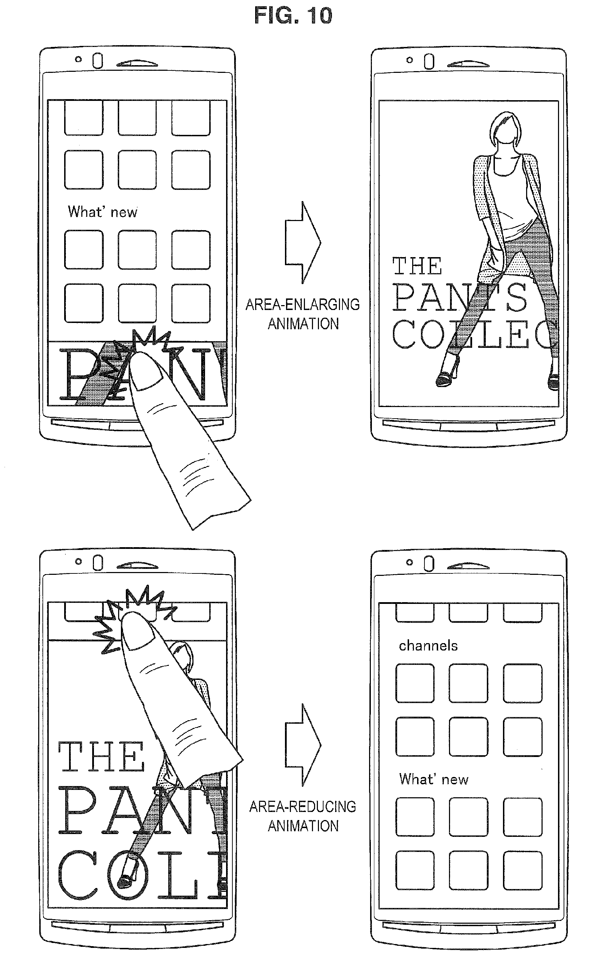

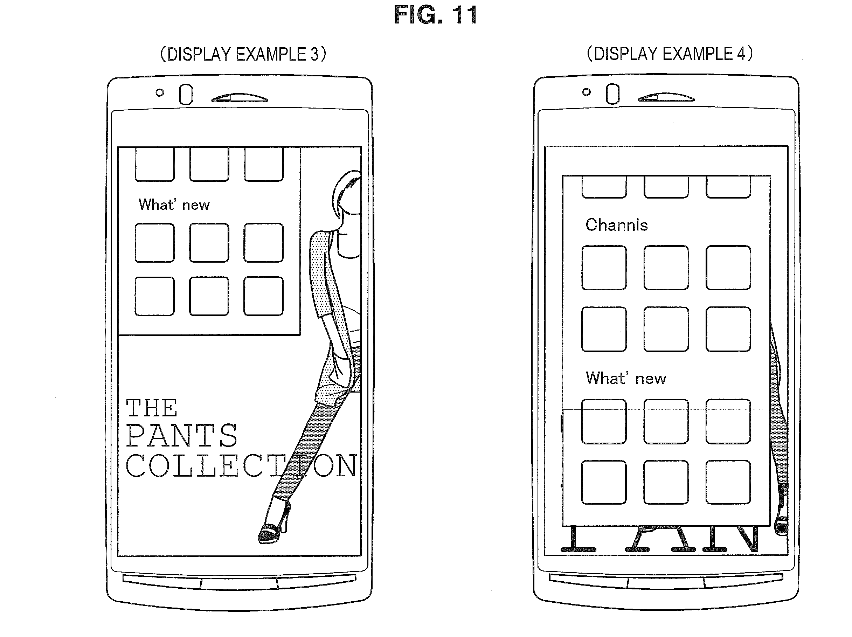

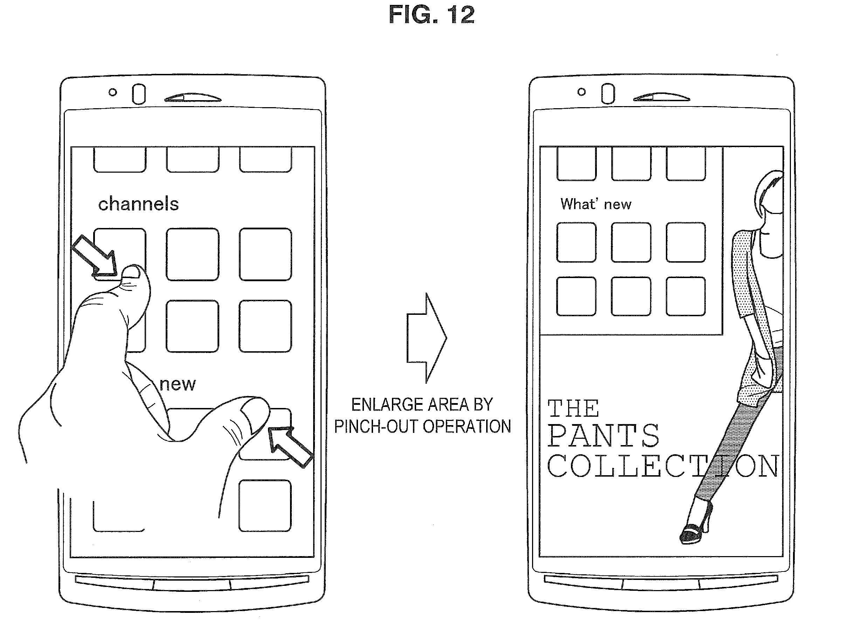

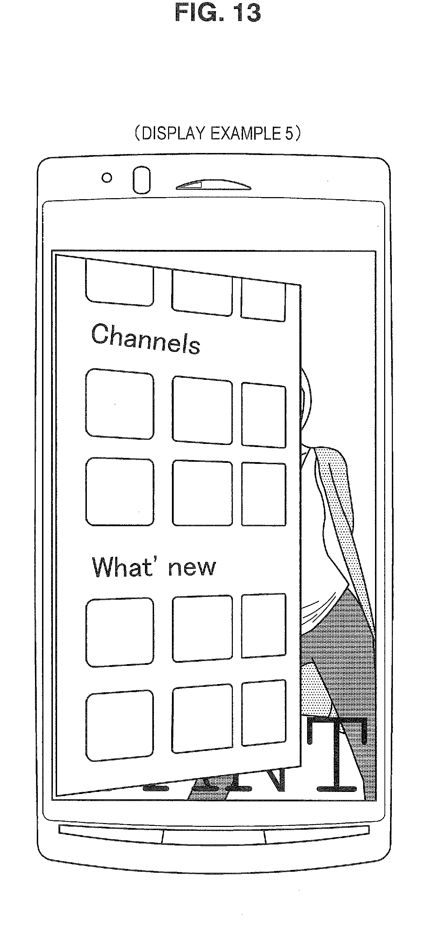

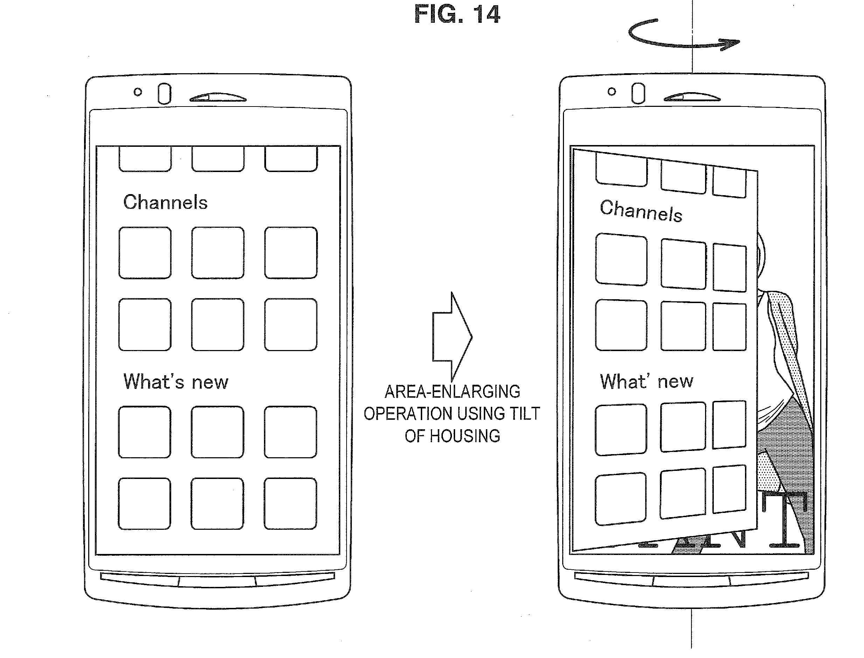

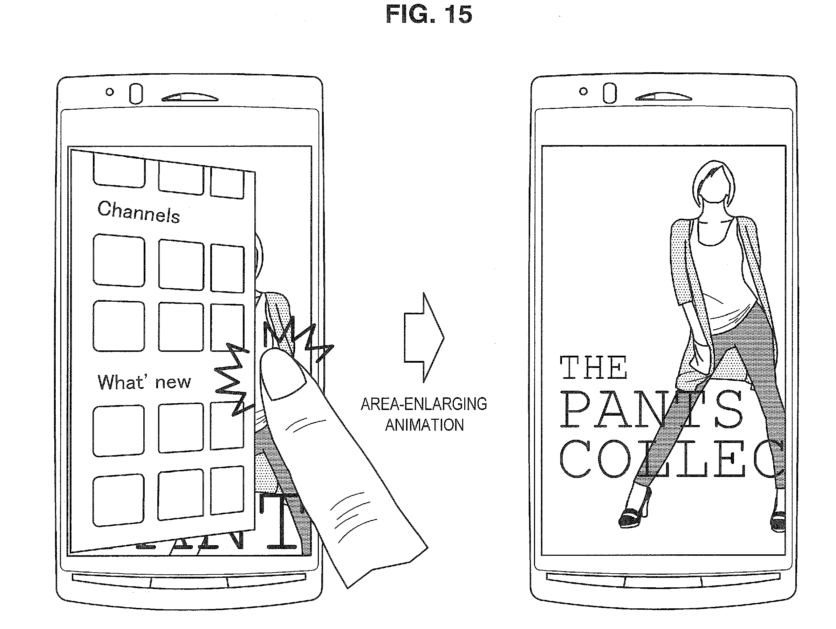

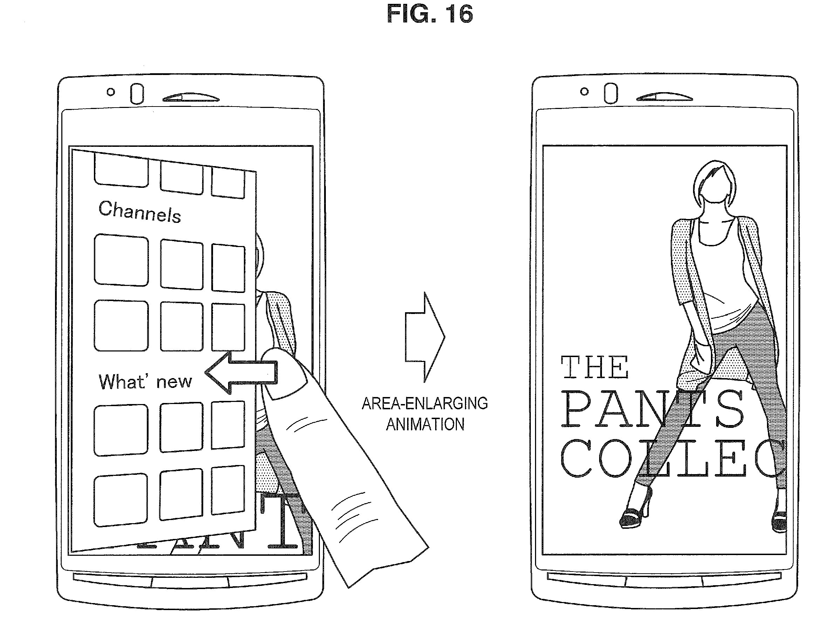

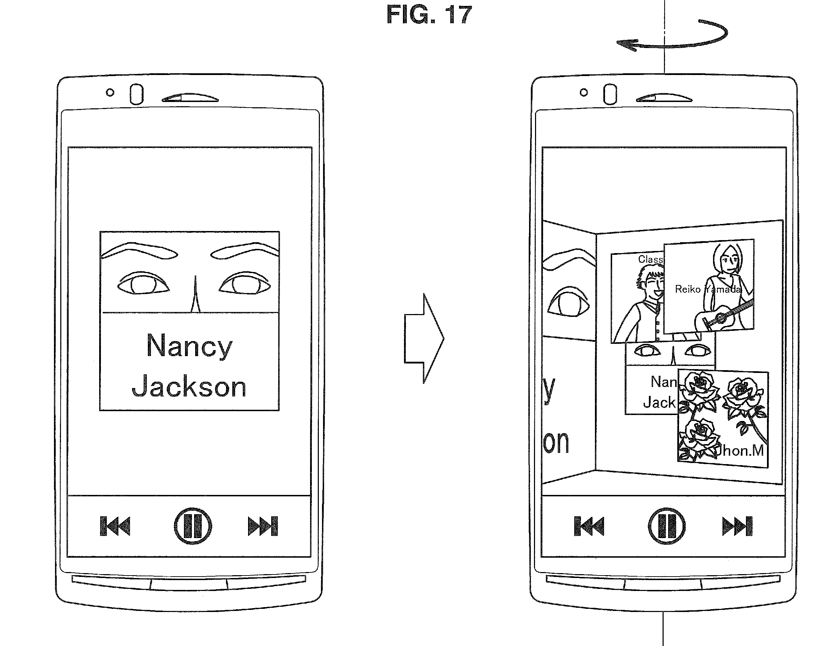

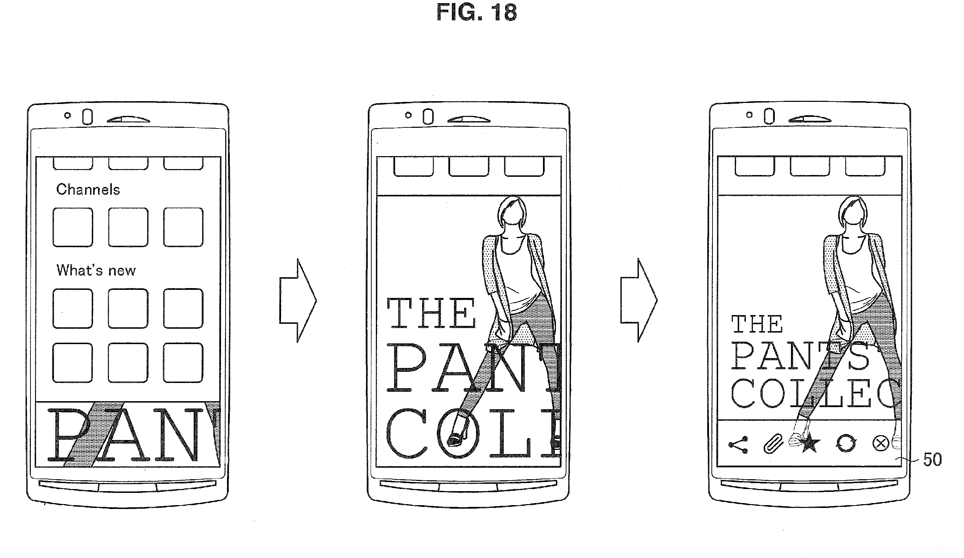

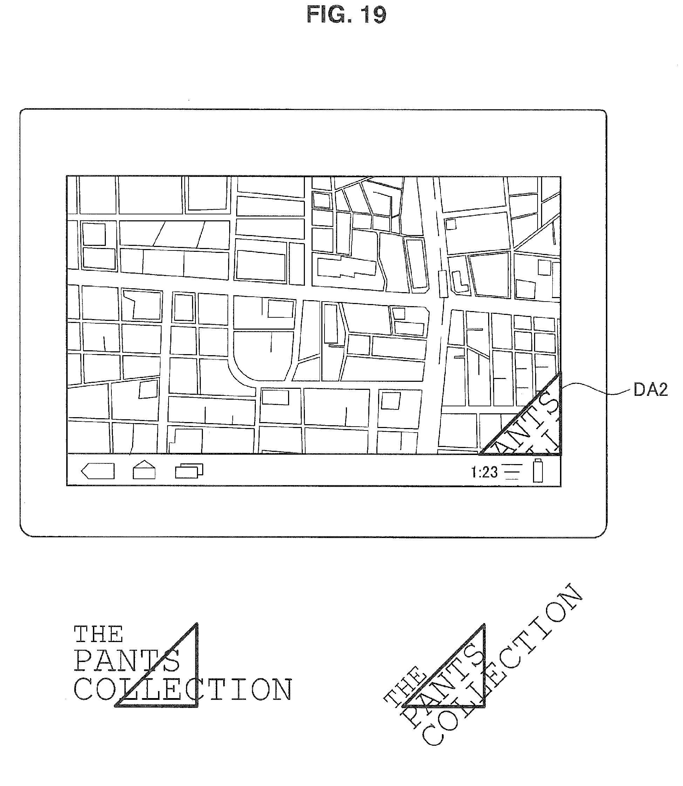

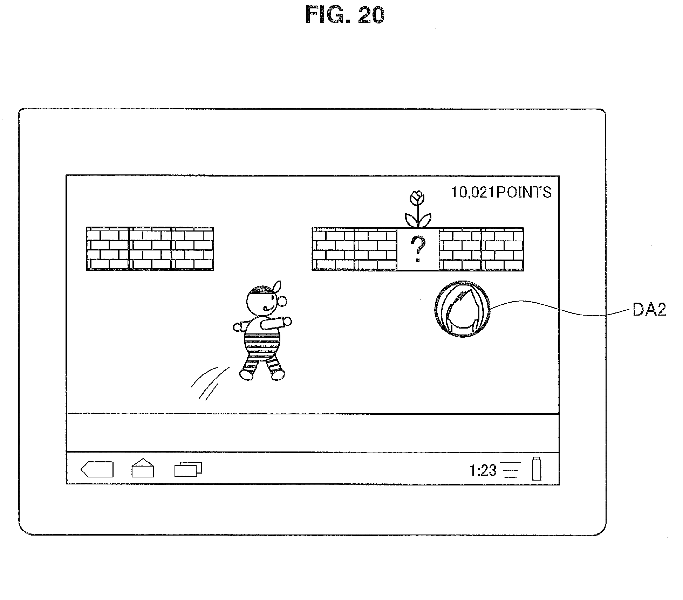

Next, referring to FIG. 7 to FIG. 20, display examples of the main information and the sub-information on the information processing device 100 according to one embodiment of the present disclosure, and operation examples for the display areas. FIG. 7 is an illustration showing Display Example 1 and Display Example 2 of the display screen to be displayed by the information processing device according to the embodiment. FIG. 8 is an illustration showing an example of an area-enlarging operation of the information processing device according to the embodiment. FIG. 9 is an illustration showing an example of an area-reducing operation of the information processing device according to the embodiment. FIG. 10 is an illustration showing another example of the area-enlarging operation and the area-reducing operation of the information processing device according to the embodiment. FIG. 11 is an illustration showing Display Example 3 and Display Example 4 of the display screen to be displayed by the information processing device according to the embodiment. FIG. 12 is an illustration showing another example of the area-enlarging operation of the information processing device according to the embodiment. FIG. 13 is an illustration showing Display Example 5 of the display screen to be displayed by the information processing device according to the embodiment. FIG. 14 is an illustration showing an example of a sub-display area display operation of the information processing device according to the embodiment. FIG. 15 is an illustration showing another example of the area-enlarging operation of the information processing device according to the embodiment. FIG. 16 is an illustration showing another example of the area-enlarging operation of the information processing device according to the embodiment. FIG. 17 is an illustration showing another example of the sub-display area to be displayed by the information processing device according to the embodiment, and another example of the sub-display area display operation. FIG. 18 is an illustration of operation buttons to be displayed by the information processing device according to the embodiment. FIG. 19 is an illustration showing an example of a sub-display area to be displayed while a map display screen is displayed by the information processing device according to the embodiment. FIG. 20 is an illustration showing an example of a sub-display area to be displayed while a game screen is displayed by the information processing device according to the embodiment.

Referring first to FIG. 7, Display Example 1 and Display Example 2 of the display screen to be displayed by the information processing device 100 are shown. The information processing device 100 may thus display sub-information as a part of the end point representation of the main information. Then, the end point of the display area of the application, which is the main information, may be represented as fading out, as shown in Display Example 2. Then, for example, as shown in the left of FIG. 8, the information processing device 100 may display the sub-display area DA2 below the lower end of the application window when a drag or flick operation is further performed at the lower end of the application window, which is the main display area DA1, when the application window is displayed across the entire display screen. If a drag or flick operation is performed in such a direction as to further enlarge the displayed sub-display area DA2, the information processing device 100 can continuously generate the display image to be displayed in the sub-display area DA2 based on the arrangement of the sub-display area DA2 while enlarging the sub-display area DA2. Then, the arrangement, display size, display angle, etc., of the part object may be adjusted based on the arrangement of the sub-display area DA2. When a drag or flick operation is performed in such a direction as to shrink the sub-display area DA2 from the state where the sub-information is displayed across the entire display screen, an area-shrinking animation of the sub-display area DA2 may be displayed until the main display area DA1 is displayed across the entire display screen, as shown in FIG. 9. Then, the information processing device 100 can continuously generate the display image to be displayed in the sub-display area DA2 in response to the shrinking of the sub-display area DA2. The area-enlarging or area-shrinking operation may be a tap operation, as shown in FIG. 10. In response to this tap operation, the sub-display area DA2 may be enlarged until the sub-display area DA2 is displayed across the entire display screen. In this process, the display image to be displayed in the sub-display area DA2 is generated based on the arrangement of the sub-display area DA2 at each point in time.

Referring next to FIG. 11, Display Example 3 and Display Example 4 of the display screen to be displayed by the information processing device 100 are shown. As shown in Display Example 3 and Display Example 4, the sub-display area DA2 may be a background area of the main display area DA1. For example, the sub-display area DA2 may be displayed as an error representation when an error has occurred in the main display area DA1. For example, the sub-display area DA2 may be enlarged in response to a pinch-out operation performed on the main display area DA1, as shown in FIG. 12.

Referring next to FIG. 13, Display Example 5 of the display screen to be displayed by the information processing device 100 is shown. Display Example 5 is an example where the sub-display area DA2 is displayed when the housing of the information processing device 100 is tilted. As shown in FIG. 14, the information processing device 100 displays the sub-display area DA2 when detecting the housing of the information processing device 100 being tilted by a certain angle or more within a predetermined amount of time, for example. Then, the information processing device 100 may enlarge the sub-display area DA2 when detecting the housing of the information processing device 100 being further tilted from the state where the sub-display area DA2 is displayed. Alternatively, as shown in FIG. 15, the information processing device 100 may enlarge the sub-display area DA2 when detecting a tap operation performed on the sub-display area DA2. As shown in FIG. 16, the information processing device 100 may enlarge the sub-display area DA2 when detecting a drag or flick operation performed on the sub-display area DA2. After the sub-display area DA2 is displayed, the sub-display area DA2 is shrunk when no enlarging operation is detected over a certain amount of time or when the housing returns to the un-tilted position.

FIG. 17 shows another example of display by an operation utilizing a tilt of the housing of the information processing device 100. For example, when an operation of tilting the housing is detected in a state where the music player screen shown in the left of FIG. 17 is displayed, jacket pictures of music albums stored in the information processing device 100 may be displayed. Alternatively, the jacket pictures are not limited to those of the albums stored in the information processing device 100, but information processing devices related to the music being replayed may be obtained via a network.

FIG. 18 shows operation buttons 50 related to the sub-display area DA2. The operation buttons 50 may not be displayed in a state where a very small portion of the sub-display area DA2 is displayed, and the operation buttons 50 may be displayed after the sub-display area DA2 is enlarged. Then, it is preferred that the layout of the sub-display area DA2 is further adjusted in a state where the operation buttons 50 are displayed.

As shown in FIG. 19, the sub-display area DA2 may be arranged in a lower layer under a map display application screen (the main display area DA1). Then, initially, the sub-display area DA2 may be a very small area with respect to the main display area DA1. Then, when detecting an enlarging operation performed on the sub-display area DA2, the proportion of the sub-display area DA2 with respect to the display screen increases. Where the shape of the sub-display area DA2 is triangular as shown in FIG. 19, the angle of arrangement of the object may be determined by using the long side of the triangle. As shown in FIG. 20, the sub-display area DA2 may be arranged on a lower layer under a game screen (the main display area DA1). Then, the position of the sub-display area DA2 may change depending on the state of the game screen. Similarly in this case, when detecting an enlarging operation performed on the sub-display area DA2, the proportion of the sub-display area DA2 with respect to the display screen increases.

### <5. Layout process>

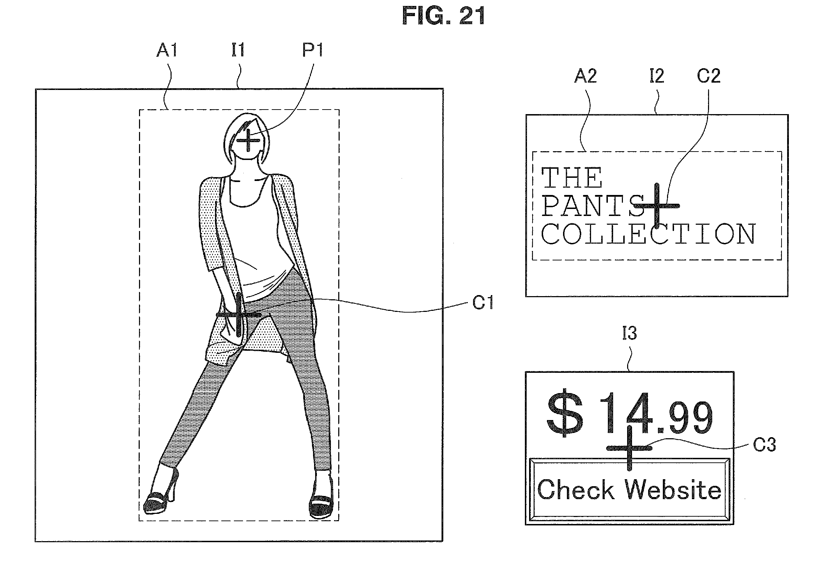

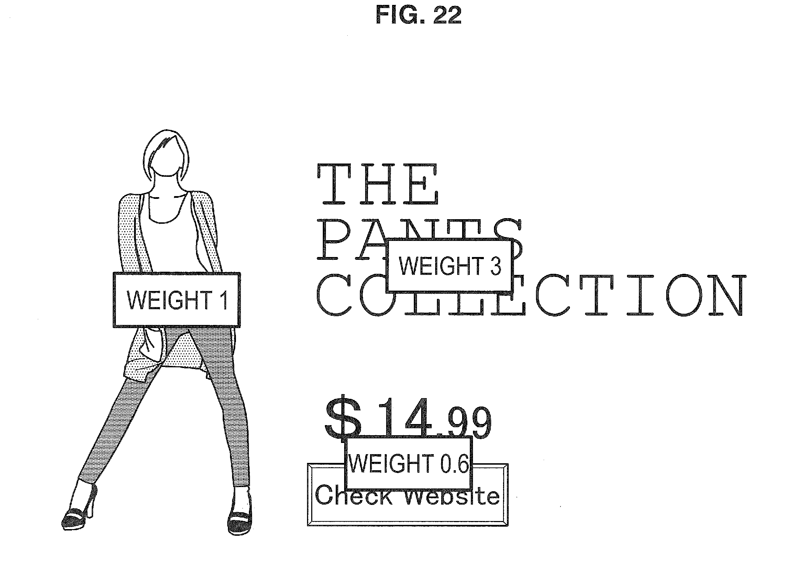

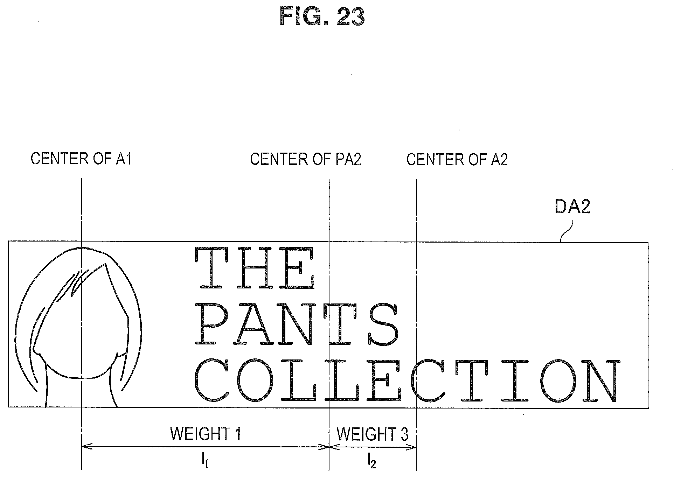

Referring next to FIG. 21 to FIG. 23, an example of a layout process for generating a layout of a display image to be displayed in the sub-display area DA2 by the information processing device 100 according to one embodiment of the present disclosure will be described. FIG. 21 is an illustration of content analysis of the information processing device according to the embodiment. FIG. 22 is a diagram relating to weight determination for objects of the information processing device according to the embodiment. FIG. 23 is an illustration showing an example of a layout of a sub-display area of the information processing device according to the embodiment.

Here, a method for automatically laying out an object in a limited area (the sub-display area DA2) will be illustrated. The object to be laid out here may be text, an image, a video, a pattern, etc., for example.

For this, the information processing device 100 analyzes objects included in a content item and the characteristic of the sub-display area DA2. The content analysis section 105 extracts objects included in the content item. For example, where the content item is HTML content, the content analysis section 105 can analyze image data included in the HTML file. For example, the content analysis section 105 can analyze an image file I to extract an effective area in the image data. Image data sometimes includes blank areas. Therefore, the content analysis section 105 may extract, as one object, an effective area A of the image data where information is included. The content analysis section 105 may analyze the center-of-gravity position of the effective area A. The content analysis section 105 can analyze a feature point P in the effective area A. The feature point P may be the face position P1 if a human is included in the image as shown in the image I1, for example. Where the image is a car, the feature point P may be the position of the emblem. The content analysis section 105 can also analyze the color of the image, font size, type (a human, a scenery, text), target, presence/absence of an event, etc. A text area may be extracted as an effective area A2, as in an image file I2, and the center of gravity of the effective area A2 is defined as C2. Alternatively, where no blank area is included in the original image data as in the image file I3, the content analysis section 105 may determine that the entire image file I3 is the effective area, and analyze the center of gravity C3 of the image file I3. When analyzing an HTML file, the content analysis section 105 not only analyzes the objects, but also analyzes the tree structure, syntax, style and colors being used, etc., of the HTML.

The display area analysis section 110 also analyzes the characteristic of the sub-display area DA2. For example, the display area analysis section 110 can analyze the shape, size and display DPI (Dots Per Inch) of the sub-display area DA2.

Next, as shown in FIG. 22, the weight of each object is determined. The weight is a value determined in accordance with the degree of priority with which each element is displayed, and it may be determined based on a user input, or may be determined by the information processing device 100 using some algorithm. Note that the weight may change following changes in the arrangement of the sub-display area DA2. For example, in a state where the sub-display area DA2 is a very small partial area of the display screen, it is preferred that the weight is high for a logo mark associated with the entire content item or an image that represents the entire content item. Thus, the weight may be determined based on the arrangement of the sub-display area DA2. For example, the weight when the sub-display area DA2 is in a minimum display state and that when the sub-display area DA2 is in a maximum display state may be determined. Moreover, the weight may be determined for states at some points between the minimum display state and the maximum display state of the sub-display area DA2, thus interpolating the gap therebetween.

FIG. 23 shows a layout example of the sub-display area DA2 when the weights of the objects are determined as shown in FIG. 22, for example. Now, not all of the objects need to be laid out in the sub-display area DA2. The object denoted as the effective area A1 in FIG. 21 has a weight of 1, and the object denoted as the effective area A2 has a weight of 3. In this case, it is preferred that an object of a higher weight is arranged closer to the center of the sub-display area DA2. For example, as shown in FIG. 23, 11:12=3:1 may hold true between the distance 11 between the center of the effective area A1 and the center of the sub-display area DA2 and the distance 12 between the center of the effective area A2 and the center of the sub-display area DA2.

### <6. Operation example>

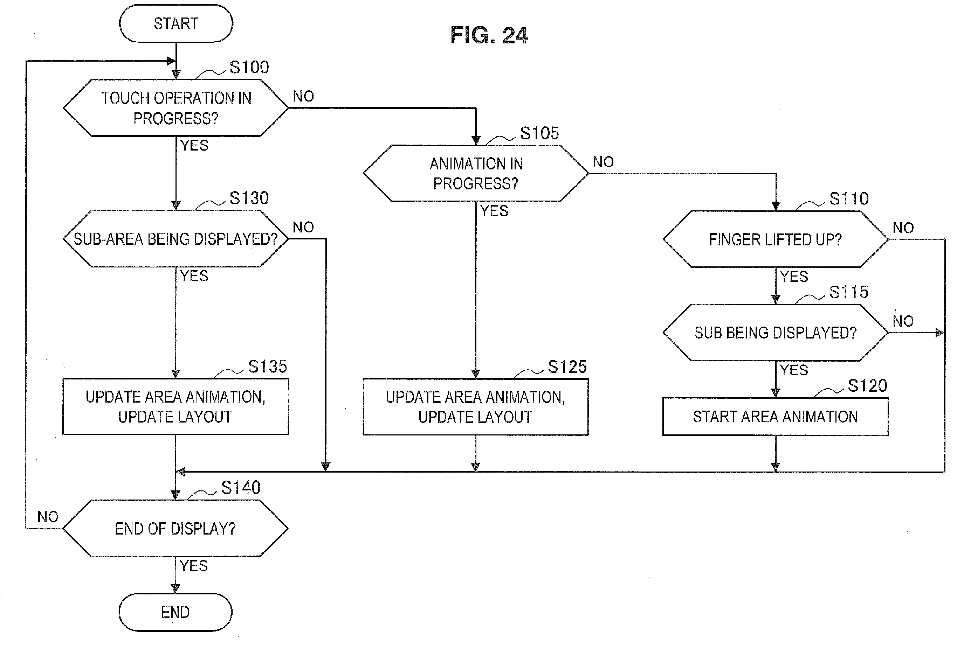

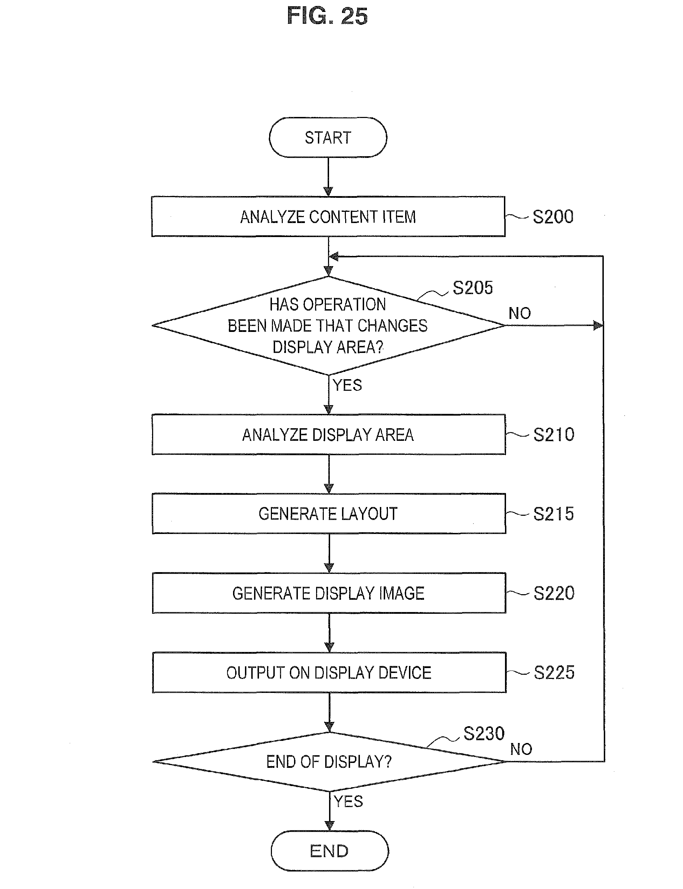

Referring next to FIG. 24 and FIG. 25, an operation example of the information processing device 100 according to one embodiment of the present disclosure will be described. FIG. 24 is a flow chart showing an operation example of the information processing device according to the embodiment. FIG. 25 is a flow chart showing an operation example of a layout process of the information processing device according to the embodiment.

Referring first to FIG. 24, the operation information obtaining section 125 determines whether a touch operation is in progress (S100). If a touch operation is not in progress, the display section 120 next determines whether an animation is in progress. Herein, an animation being in progress means that the arrangement of the sub-display area DA2 is being changed using an animation representation. If it is determined in step S105 that an animation is not in progress, it is next determined whether the finger has been lifted up, i.e., whether the finger has come off the operation section (S110). If it is determined in step S110 that the finger has been lifted up, it is next determined whether the sub-display area DA2 is being displayed (S115). If it is determined that the sub-display area DA2 is being displayed, an area animation is started (S120). Note that an area animation as used herein refers to an animation that involves a change in the arrangement of the sub-display area DA2.

On the other hand, if it is determined in step S105 that an animation is in progress, the area animation and the layout are next updated (S125). The updated layout as used herein refers to a layout of an object in the sub-display area DA2.

On the other hand, if it is determined in step S100 that a touch is in progress, it is next determined whether the sub-display area DA2 is being displayed (S130). Now, if the sub-display area DA2 is being displayed, the area animation and the layout are updated (S135).

After these processes are performed, it is determined whether the display has ended (S140). If the display has not ended, the operation returns to step S100 to repeat the process described above.

Referring next to FIG. 25, an operation example of the layout process portion of the information processing device 100 according to the present embodiment is shown. First, the content analysis section 105 analyzes a content item (S200). The content item to be analyzed may be an HTML file or an image file, for example. The display area analysis section 110 next determines whether an operation that changes the display area has been made (S205). If an operation that changes the display area is detected, the display area analysis section 110 analyzes the display area (S210).

Then, the image generating section 115 generates a layout based on the content item analysis result of step S200 and the display area analysis result of step S210 (S215). Then, the image generating section 115 generates a display image to be displayed on the display device (S220). Then, the display section 120 outputs the generated display image using the display device (S225). Then, it is determined whether the display has ended (S230), and the process described above is repeated until the display ends.

### <7. Hardware configuration example>

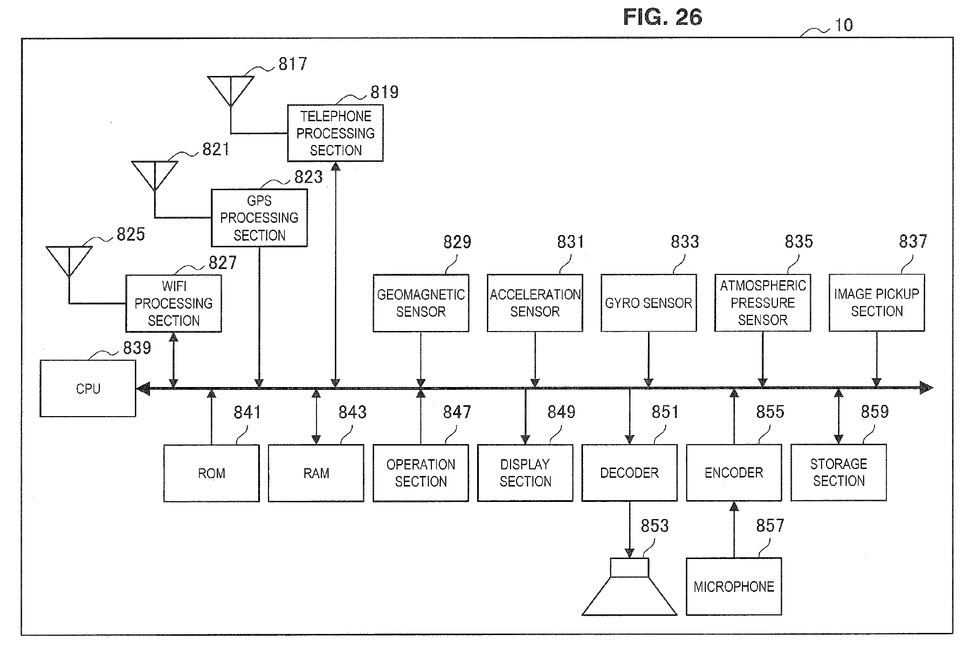

Referring next to FIG. 26, a hardware configuration example of the information processing device 100 according to one embodiment of the present disclosure will be described. FIG. 26 is a block diagram showing a hardware configuration of the information processing device according to the embodiment.

Now, an example of a configuration of the information processing device 100 will be described. Referring to FIG. 26, the information processing device 100 includes a telephone network antenna 817, a telephone processing section 819, a GPS antenna 821, a GPS processing section 823, a Wifi antenna 825, a Wifi processing section 827, a geomagnetic sensor 829, an acceleration sensor 831, a gyro sensor 833, an atmospheric pressure sensor 835, an image pickup section 837, a CPU (Central Processing Unit) 839, a ROM (Read Only Memory) 841, a RAM (Random Access Memory) 843, an operation section 847, a display section 849, a decoder 851, a speaker 853, an encoder 855, a microphone 857, and a storage section 859, for example. Note that the hardware configuration illustrated herein is an example, and some of the components may be omitted. It is understood that components other than those illustrated herein may be further included.

### (Telephone network antenna 817)

The telephone network antenna 817 is an example of an antenna having a function of wirelessly connecting to a mobile telephone network for telephone calls and communications. The telephone network antenna 817 is capable of supplying call signals received via the mobile telephone network to the telephone processing section 819.

### (Telephone processing section 819)

The telephone processing section 819 has a function of performing various signal processes on signals transmitted/received by the telephone network antenna 817. For example, the telephone processing section 819 is capable of performing various signal processes on the audio signal received via the microphone 857 and encoded by the encoder 855, and supplying it to the telephone network antenna 817. The telephone processing section 819 is capable of performing various signal processes on the audio signal supplied from the telephone network antenna 819, and supplying it to the decoder 851.

### (GPS antenna 821)

The GPS antenna 821 is an example of an antenna for receiving signals from positioning satellites. The GPS antenna 821 is capable of receiving GPS signals from a plurality of GPS satellites, and inputting the received GPS signals to the GPS processing section 823.

### (GPS processing section 823)

The GPS processing section 823 is an example of a calculation section for calculating position information based on signals received from positioning satellites. The GPS processing section 823 calculates the current position information based on a plurality of GPS signals input from the GPS antenna 821, and outputs the calculated position information. Specifically, the GPS processing section 823 calculates the position of each GPS satellite from the orbit data of the GPS satellite, and calculates the distance from each GPS satellite to the information processing device 100 based on the time difference between the transmission time and the reception time of the GPS signal. Then, it is possible to calculate the current three-dimensional position based on the position of each GPS satellite and the distance from the GPS satellite to the information processing device 100 calculated. Note that the orbit data of the GPS satellite used herein may be included in the GPS signal, for example. Alternatively, the orbit data of the GPS satellite may be obtained from an external server via the communication antenna 825.

### (Wifi antenna 825)

The Wifi antenna 825 is an antenna having a function of transmitting/receiving communication signals with a wireless LAN (Local Area Network) communication network in compliance with the Wifi specifications, for example. The Wifi antenna 825 is capable of supplying the received signal to the communication processing section 827.

### (Wifi processing section 827)

The Wifi processing section 827 has a function of performing various signal processes on signals supplied from the Wifi antenna 825. The Wifi processing section 827 is capable of supplying, to the CPU 839, a digital signal generated from the supplied analog signal.

### (Geomagnetic sensor 829)

The geomagnetic sensor 829 is a sensor for detecting the geomagnetism as a voltage value. The geomagnetic sensor 829 may be a 3-axis geomagnetic sensor for detecting the geomagnetism in each of the X-axis direction, the Y-axis direction and the Z-axis direction. The geomagnetic sensor 829 is capable of supplying the detected geomagnetism data to the CPU 839.

### (Acceleration sensor 831)

The acceleration sensor 831 is a sensor for detecting acceleration as a voltage value. The acceleration sensor 831 may be a 3-axis acceleration sensor for detecting the acceleration along the X-axis direction, the acceleration along the Y-axis direction, and the acceleration along the Z-axis direction. The acceleration sensor 831 is capable of supplying the detected acceleration data to the CPU 839.

### (Gyro sensor 833)

The gyro sensor 833 is a type of a measuring instrument for detecting the angle or the angular velocity of an object. The gyro sensor 833 may be a 3-axis gyro sensor for detecting, as a voltage value, the velocity (angular velocity) at which the rotational angle changes about the X axis, the Y axis and the Z axis. The gyro sensor 833 is capable of supplying the detected angular velocity data to the CPU 839.

### (Atmospheric pressure sensor 835)

The atmospheric pressure sensor 835 is a sensor for detecting the ambient atmospheric pressure as a voltage value. The atmospheric pressure sensor 835 is capable of detecting the atmospheric pressure at a predetermined sampling frequency, and supplying the detected atmospheric pressure data to the CPU 839.

### (Image pickup section 837)

The image pickup section 837 has a function of recording a still image or a moving picture through a lens under the control of the CPU 839. The image pickup section 837 may store the recorded image in the storage section 859.

### (CPU 839)

The CPU 839 functions as an arithmetic processing device and a control device, and controls the overall operation within the information processing device 100 by various programs. The CPU 839 may be a microprocessor. The CPU 839 is capable of implementing various functions by various programs.

### (ROM 841, RAM 843)

The ROM 841 is capable of storing programs, operation parameters, etc., used by the CPU 839. The RAM 843 is capable of temporarily storing a program to be used while being executed by the CPU 839, and parameters, or the like, which appropriately vary during the execution.

### (Operation section 847)

The operation section 847 has a function of generating an input signal for performing a desired operation. The operation section 847 may include an input section for inputting information, such as a touch sensor, a mouse, a keyboard, a button, a microphone, a switch and a lever, for example, and an input control circuit for generating an input signal based on the input and outputting it to the CPU 839, etc.

### (Display section 849)

The display section 849 is an example of an output device, and may be a display device such as a liquid crystal display (LCD: Liquid Crystal Display) device, an organic EL (OLED: Organic Light Emitting Diode) display device, or the like. The display section 849 is capable of providing information by displaying a screen.

### (Decoder 851, speaker 853)

The decoder 851 has a function of performing a decoding, an analog conversion, etc., of the input data under the control of the CPU 839. The decoder 851 is capable of, for example, performing a decoding, an analog conversion, etc., of the audio data which has been input via the telephone network antenna 817 and the telephone processing section 819 to output the audio signal to the speaker 853. The decoder 851 is also capable of, for example, performing a decoding, an analog conversion, etc., of the audio data which has been input via the Wifi antenna 825 and the Wifi processing section 827 to output the audio signal to the speaker 853. The speaker 853 is capable of outputting sound based on the audio signal supplied from the decoder 851.

### (Encoder 855, microphone 857)

The encoder 855 has a function of performing a digital conversion, an encoding, etc., of the input data under the control of the CPU 839. The encoder 855 is capable of performing a digital conversion, an encoding, etc., of the audio signal which is input from the microphone 857 to output audio data. The microphone 857 is capable of collecting sound to output the sound as an audio signal.

### (Storage section 859)

The storage section 859 is a device for data storage, and may include a storage medium, a recording device for recording data on a storage medium, a reading device for reading out data from a storage medium, a deleting device for deleting data recorded on a storage medium, etc. The storage medium may be, for example, a nonvolatile memory such as a flash memory, an MRAM (Magnetoresistive Random Access Memory), an FeRAM (Ferroelectric Random Access Memory), a PRAM (Phase change Random Access Memory), and an EEPROM (Electronically Erasable and Programmable Read Only Memory), a magnetic recording medium such as an HDD (Hard Disk Drive), or the like.

The preferred embodiments of the present invention have been described above with reference to the accompanying drawings, whilst the present invention is not limited to the above examples, of course. A person skilled in the art may find various alterations and modifications within the scope of the appended claims, and it should be understood that they will naturally come under the technical scope of the present invention.

For example, while an advertisement is displayed in a sub-display area in the embodiment described above, the present technique is not limited such an example. For example, the sub-display area may be a dictionary display area for displaying description text for a word displayed in the main display area DA1. In the embodiment described above, the advertisement displayed in the sub-display area may be of content unrelated to the main information displayed in the main display area, or information related to the main information may be extracted and displayed in the sub-display area. An advertisement as sub-information may also be information that reflects user's preferences based on results of the learning function.

While it is assumed in the above embodiment that processes such as generating a display image are performed on the information processing device 100, which is the client unit, the technical scope of the present disclosure is not limited to such an example. Some of the functions of the information processing device 100 may be implemented on a server connected to the client unit via a network. Such a server can perform processes such as analyzing a content item, analyzing a display area, or generating a display image, for example, in response to an instruction transmitted from the client unit, and transmit a display image or a display control signal to the client unit. Such embodiments are also included within the technical scope of the present disclosure.

Note that steps listed in flow charts in the present specification not only include those processes that are performed chronologically in the order they are listed, but also include those processes that may not be performed chronologically but are performed in parallel or individually. It is understood that even steps that are processed chronologically can be in some cases performed in a different order as necessary.

Additionally, the present technology may also be configured as below.
(1) An information processing device including:
   an obtaining section configured to obtain a content item to be displayed in a first display area of a display screen; and
   an image generating section configured to generate a display image by laying out the content item based on an arrangement of the first display area.
(2) The information processing device according to (1), wherein the content item includes sub-information different from main information displayed in the display screen.
(3) The information processing device according to (2), wherein the sub-information is information subordinate to the main information.
(4) The information processing device according to (2) or (3), wherein the first display area is arranged in a lower layer under a second display area in which the main information is displayed.
(5) The information processing device according to any one of (1) to (4), wherein
   the display screen includes a plurality of first display areas, and
   the image generating section lays out the content item based on an arrangement of the plurality of first display areas.
(6) The information processing device according to (5), wherein the image generating section determines an angle at which the object is arranged based on the arrangement of the plurality of first display areas.
(7) The information processing device according to any one of (1) to (6), wherein
   a size of the first display area is changed in response to an operation, and
   the image generating section generates the display image in accordance with the size of the first display area.
(8) The information processing device according to any one of (1) to (7), wherein
   the obtaining section obtains objects included in the content item, and
   the image generating section lays out the content item by determining an arrangement of the objects.
(9) The information processing device according to (8), wherein the image generating section generates the display image including one or more of the objects included in the content item.
(10) The information processing device according to (8) or (9), wherein the image generating section generates the display image in which the objects are arranged based further on attributes of the objects.
(11) The information processing device according to (9) or (10), wherein
   a size of the first display area is enlarged in response to an enlarging operation, and
   before the enlarging operation, the image generating section generates the display image which preferentially includes objects associated with the entire content item.
(12) The information processing device according to (11), wherein after the enlarging operation, the image generating section determines a degree of priority of each object based on a display history of the object.
(13) An information processing method including:
   obtaining a content item to be displayed in a first display area of a display screen; and
   generating a display image by laying out the content item based on an arrangement of the first display area.
(14) A program for causing a computer to function as an information processing device including:
   an obtaining section configured to obtain a content item to be displayed in a first display area of a display screen; and
   an image generating section configured to generate a display image by laying out the content item based on an arrangement of the first display area.

### Reference Signs List

- 100: information processing device
- 105: content analysis section
- 110: display area analysis section
- 115: image generating section
- 120: display section
- 125: operation information obtaining section

## Claims

1. An information processing device comprising:
an obtaining section configured to obtain a content item to be displayed in a first display area of a display screen; and
an image generating section configured to generate a display image by laying out the content item based on an arrangement of the first display area.

2. The information processing device according to claim 1, wherein the content item includes sub-information different from main information displayed in the display screen.

3. The information processing device according to claim 2, wherein the sub-information is information subordinate to the main information.

4. The information processing device according to claim 2, wherein the first display area is arranged in a lower layer under a second display area in which the main information is displayed.

5. The information processing device according to claim 1, wherein
the display screen includes a plurality of first display areas, and
the image generating section lays out the content item based on an arrangement of the plurality of first display areas.

6. The information processing device according to claim 5, wherein the image generating section determines an angle at which the object is arranged based on the arrangement of the plurality of first display areas.

7. The information processing device according to claim 1, wherein
a size of the first display area is changed in response to an operation, and the image generating section generates the display image in accordance with the size of the first display area.

8. The information processing device according to claim 1, wherein
the obtaining section obtains objects included in the content item, and
the image generating section lays out the content item by determining an arrangement of the objects.

9. The information processing device according to claim 8, wherein the image generating section generates the display image including one or more of the objects included in the content item.

10. The information processing device according to claim 8, wherein the image generating section generates the display image in which the objects are arranged based further on attributes of the objects.

11. The information processing device according to claim 9, wherein
a size of the first display area is enlarged in response to an enlarging operation, and
before the enlarging operation, the image generating section generates the display image which preferentially includes objects associated with the entire content item.

12. The information processing device according to claim 11, wherein after the enlarging operation, the image generating section determines a degree of priority of each object based on a display history of the object.

13. An information processing method comprising:
obtaining a content item to be displayed in a first display area of a display screen; and
generating a display image by laying out the content item based on an arrangement of the first display area.

14. A program for causing a computer to function as an information processing device comprising:
an obtaining section configured to obtain a content item to be displayed in a first display area of a display screen; and
an image generating section configured to generate a display image by laying out the content item based on an arrangement of the first display area.
